# EUROPÄISCHE PATENTSCHRIFT

(11) **EP 1 352 260 B1**
(45) Veröffentlichungstag und Bekanntmachung des Hinweises auf die Patenterteilung: **27.04.2011**
(21) Anmeldenummer: 01991685.7
(22) Anmeldetag: 22.12.2001
(51) Int. Cl.: G01S 7/28, G01S 13/26, G01S 7/36

(54) **RADAREINRICHTUNG UND VERFAHREN ZUM UNTERDRÜCKEN VON STÖRUNGEN EINER RADAREINRICHTUNG**
RADAR DEVICE AND A METHOD FOR SUPPRESSING INTERFERENCE IN A RADAR DEVICE
DISPOSITIF RADAR ET PROCEDE DE SUPPRESSION DE PERTURBATIONS DANS UN DISPOSITIF RADAR

(30) Priorität: 08.01.2001 DE 10100416
(43) Veröffentlichungstag der Anmeldung: 15.10.2003
(73) Patentinhaber: ROBERT BOSCH GMBH, 70442 Stuttgart (DE)
(72) Erfinder: BROSCHE, Thomas, 70195 Stuttgart (DE)
(86) Internationale Anmeldenummer: PCT/DE2001/004914
(87) Internationale Veröffentlichungsnummer: WO 2002/054104

(56) Entgegenhaltungen:
- DE-A- 19 963 005
- US-A- 4 115 772
- US-A- 5 291 202
- US-A- 5 583 512
- US-A- 6 069 581

## Beschreibung

Die Erfindung betrifft eine Radareinrichtung mit Mitteln zum Erzeugen eines Trägersignals mit einer Trägerfrequenz f_{T}, Mitteln zum Erzeugen von Pulsen mit einer Pulswiederholfrequenz f_{PW}, Mitteln zum Aufteilen des Trägersignals auf einen Sendezweig und einen Empfangszweig, Mitteln zum Verzögern der Pulse, Mitteln zum Modulieren des Trägersignals in dem Sendezweig mit den unverzögerten Pulsen, Mitteln zum Modulieren des Trägersignals in dem Empfangszweig mit den verzögerten Pulsen und zum Erzeugen eines Referenzsignals, Mitteln zum Mischen des Referenzsignals in dem Empfangszweig mit einem Empfangssignal und Mitteln zum Integrieren des gemischten Signals. Die Erfindung betrifft ferner ein Verfahren zum Unterdrücken von Störungen einer Radareinrichtung mit den Schritten: Erzeugen eines Trägersignals mit einer Trägerfrequenz f_{T}, Erzeugen von Pulsen mit einer Pulswiederholfrequenz f_{PW}, Aufteilen des Trägersignals auf einen Sendezweig und einen Empfangszweig, Verzögern der Pulse, Modulieren des Trägersignals in dem Sendezweig mit den unverzögerten Pulsen, Modulieren des Trägersignals in dem Empfangszweig mit den verzögerten Pulsen und Erzeugen eines Referenzsignals, Mischen des Referenzsignals in dem Empfangszweig mit einem Empfangssignal und Integrieren des gemischten Signals.

### Stand der Technik

Aus der US 5,291,202 ist ein Rausch-Radar bekannt, bei dem eine Pseudo-Zufalls-Sequenz wiederholt erzeugt und dazu benutzt wird, ein ausgesandtes Signal in der Phase zu modulieren. Die Sendung wird während einer Anzahl von Perioden während jeder Pseudo-Zufalls-Sequenz unterbrochen, was es ermöglicht, Rückkehrsignale von den Zielen mittels der gleichen Antenne zu empfangen, die während dieser Unterbrechungsperioden zur Aussendung benutzt wird. Jeder gesendete Impuls zwischen aufeinander folgenden Perioden der Unterbrechung enthält eine unterschiedliche Auswahl von aufeinander folgenden Digits des Codes, wodurch der Zufallscharakter des ausgesandten Codes erhöht und eine Detektion erschwert wird.

Aus der US 4,115,772 ist ein Pseudo-Rausch-Radarsystem bekannt, das einen binären Pulscode von maximaler Länge verwendet. Durch die Amplitude des Pseudo-Zufalls-Codes wird eine Trägerwelle moduliert, in den die Phase dieser Trägerwelle um 180° gedreht wird. Es wird entweder die amplitudenmodulierte Welle oder die phasengedrehte Welle abgestrahlt und die empfangene Welle mittels eines multiplikativen Mischers, der die andere, nicht ausgesandte Welle ebenfalls als Eingangssignal erhält, zugeführt. Der Mischerausgang hat die effektive Länge (L+1)/2 wenn die Signale miteinander korreliert sind, wobei L die Wortlänge des Pseudo-Zufalls-Codewortes ist. Signale, die nicht miteinander korreliert sind, werden hierdurch auf ein Minimum abgeschwächt.

Aus der US 5,583,512 ist ein Radarsystem bekannt, das einen zweidimensionalen Korrelator enthält wobei zeitgleich sowohl der Abstand als auch die Dopplerverschiebung korreliert werden. Beide Korrelationen werden mittels eines einzigen Kanals durchgeführt, wodurch die Mehrdeutigkeit der Messung aufgelöst werden kann. Hierzu wird eine binäre Zufallssequenz verwendet, mittels der die Phase des Sendesignals moduliert wird.

Aus der US 6,069,581 ist ein Hochleistungsfahrzeugradarsystem bekannt, das Warnungen beim Rückwärtsfahren abgeben soll, um Kollisionen zu vermeiden. Hierzu werden programmierbare Zeitverzögerungen und programmierbare Verstärkereinstellungen verwendet, um die detektierten Objekte hinsichtlich ihrer Art und Entfernungen des Radarerfassungsbereichs zu detektieren. Erkannte Ziele werden bezüglich ihres Abstandes und ihrer Art detektiert und katalogisiert und der Fahrer des Fahrzeugs visuell oder akustisch hinsichtlich des Abstandes dieser Objekte gewarnt.

Gattungsgemäße Radareinrichtungen und Verfahren werden beispielsweise für die Nahbereichssensorik in Kraftfahrzeugen verwendet. Sie dienen zum Beispiel der Unfallverhütung oder der Detektion von Objekten in einem toten Winkel eines Kraftfahrzeuges.

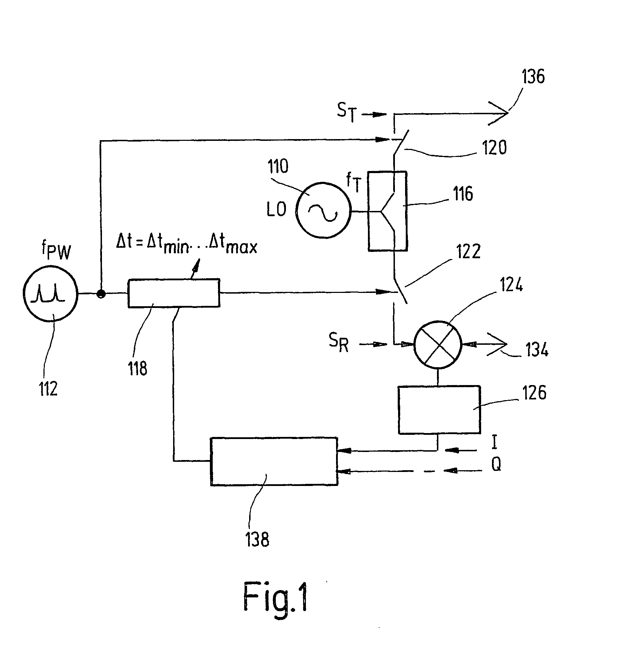

Figur 1 zeigt schematisch den grundlegenden Aufbau einer Radareinrichtung des Standes der Technik. Von einem Lokaloszillator (LO) 110 wird eine Trägerfrequenz f_{T} erzeugt. Diese Trägerfrequenz wird durch einen Leistungsteiler 116 auf einen Sendezweig und einen Empfangszweig aufgeteilt. Neben der Trägerfrequenz f_{T} wird von einem Pulsgenerator 112 eine Pulswiederholfrequenz f_{PW} zur Modulation der Trägerfrequenz bereitgestellt. Im Sendezweig erfolgt diese Modulation mit dem Schalter 120, an welchem die Trägerfrequenz anliegt und welcher mit der Pulswiederholfrequenz geschaltet wird. Das so erzeugte Signal wird von der Sendeantenne 136 abgestrahlt. Im Empfangszweig findet ebenfalls eine Modulation statt. Allerdings werden zum Zwecke dieser Modulation die Pulse der Pulswiederholfrequenz durch eine Verzögerungseinrichtung 118 verzögert. Mit diesen verzögerten Impulsen erfolgt die Modulation der Trägerfrequenz f_{T} durch Betätigen des Schalters 122, an welchem ebenfalls die Trägerfrequenz anliegt. Auf diese Weise wird in dem Empfangszweig ein Referenzsignal S_{R} zur Verfügung gestellt. Dieses Referenzsignal wird in ei-nem Mischer 124 mit einem über die Empfangsantenne 134 empfangenen Empfangssignal gemischt. Das Ausgangssignal des Mischers 124 wird einem Integrationsmittel 126 zugeführt, beispielsweise einem Tiefpassfilter und einem Verstärker. Das so erzeugte Signal wird einer Signalauswertung und Steuerung 138 zugeführt, vorzugsweise nach Analog-Digital-Wandlung. Die Signalauswertung und Steuerung 138 bestimmt nun die Verzögerung der Verzögerungseinrichtung 118, wobei diese zwischen einem Wert Δtₘᵢₙ und Δtₘₐₓ variiert wird. Beispielsweise kann die Verzögerung durch einen Microcontroller oder einen digitalen Signalprozessor variiert werden. Es ist ebenfalls denkbar, dass eine spezielle Hardware hierfür verwendet wird. Stimmt nun die Laufzeit der Radarpulse, welche in der Regel der doppelten Laufzeit zwischen Ziel und Antenne entspricht, mit der Verzögerung überein, so wird die Amplitude des Ausgangssignals des Mischers 126 maximal. Somit steht ein Korrelationsempfänger zur Verfügung, bei dem aus der von der Steuerung 138 eingestellten Verzögerung auf den Zielabstand und die Radialgeschwindigkeit zwischen Ziel und Antenne geschlossen werden kann. Figur 1 stellt beispielhaft nur die Bildung des Inphase(I)-Signals dar. Die Bildung des Quadratur(Q)-Signals erfolgt durch Mischung mit der um 90° phasenverschobenen Trägerfrequenz in analoger Weise.

Grundsätzlich ist es erwünscht, Störsignale der unterschiedlichsten Ursachen zu unterdrücken. Es wurde bereits vorgeschlagen, eine zusätzliche Modulation des Mikrowellensignals zu nutzen, um die an den Zielen reflektierten Signalanteile von Störsignalen zu trennen. Durch derartige Verfahren werden insbesondere Störungen durch andere nichtcodierte Sender, beispielsweise Rundfunksender, beziehungsweise Rauschen unterdrückt.

Allerdings kommt es bei Radareinrichtungen auch zu Störungen, die aus parasitären Effekten resultieren, welche also im Wesentlichen unabhängig von der Einwirkung anderer Radarsensoren sind. So besitzen zum Beispiel die Schalter 120, 122 in Figur 1 in der Realität ein endliches Verhältnis zwischen dem Widerstand im aus- beziehungsweise eingeschalteten Zustand R_{off}/Rₒₙ. Außerdem entstehen unerwünschte Abstrahlungen beziehungsweise Überkopplungen der Trägerfrequenz vom Lokaloszillator zum Beispiel zum Referenzeingang des Mischers. Das bedeutet, dass in den Sendepausen zwischen den Radarpulsen ein näherungsweise kontinuierliches trägerfrequentes Lecksignal mit geringer Amplitude gesendet wird. Insbesondere auch im Referenzzweig ist dieses Lecksignal unabhängig von der eingestellten Verzögerung vorhanden und wird mit dem Empfangssignal gemischt. Dadurch und durch andere parasitäre Effekte erhält man zusätzlich von Zielen, die sich außerhalb des momentan durch die Verzögerung im Referenzsignal eingestellten Entfernungsbereichs (Range-Gate) befinden, ein Störsignal. Besitzen diese "unerwünschten" Ziele einen großen Rückstreuquerschnitt oder befinden sich diese im Nahbereich des Sensors, dann kann die Störsignalamplitude in der Größenordnung der Nutzsignalamplitude liegen beziehungsweise diese übersteigen und folglich zu Fehlmessungen führen.

Eine Verbesserung des Verhältnisses R_{off}/Rₒₙ und damit eine begrenzte Verringerung der Störsignalamplitude ist z.B. durch den Einsatz mehrerer in Serie angebrachter Schalter möglich. Dadurch werden jedoch der technische Aufwand und folglich die Kosten erhöht.

### Vorteile der Erfindung

Gemäß einer ersten Ausführungsform baut die Erfindung auf einer Radareinrichtung des Standes der Technik dadurch auf, dass Mittel zur BPSK-Modulation ("Binary Phase Shift Keying") des Trägersignals vorgesehen sind. Durch eine BPSK-Modulation des Trägersignals kann erreicht werden, dass bei der nachfolgenden Integration Störsignale mit ständig alternierendem Vorzeichen integriert werden, während die Integration des Nutzsignals mit konstantem Vorzeichen erfolgt. Auf diese Weise werden die Störsignale unterdrückt.

Gemäß einer zweiten Ausführungsform baut die Erfindung auf einer Radareinrichtung des Standes der Technik dadurch auf, dass Mittel zum Umschalten der Polarität des Empfangssignals vorgesehen sind. Auf diese Weise erreicht man ebenfalls durch die nachfolgende Integration eine weitgehende Unterdrückung der Störsignale, während die Nutzsignale weiterverarbeitet werden.

Vorzugsweise sind Mittel zur BPSK-Modulation des Trägersignals in dem Sendezweig vorgesehen. Bei dieser Variante kann das Trägersignal in dem Empfangszweig ohne BPSK-Modulation als Referenzsignal dem Mischer zugeführt werden. Im Sendezweig erfolgt hingegen eine Modulation, so dass hier die für die Störsignalunterdrückung erforderliche Information vorliegt.

Es kann aber auch vorteilhaft sein, dass Mittel zur BPSK-Modulation des Trägersignals in dem Empfangszweig vorgesehen sind. Als Referenzsignal wird in diesem Fall ein BPSK-moduliertes Trägersignal verwendet, während das Sendesignal unmoduliert ausgesendet wird. Die für die Störsignalunterdrückung erforderliche Information ist in dem Trägersignal in dem Empfangszweig enthalten.

Besonders nützlich ist es, wenn durch die BPSK-Modulation eine Umschaltung der Phasenlage für eine halbe Periode T_{PW} der Pulswiederholfrequenz f_{PW} erfolgt. Die Phase des modulierten Trägersignals wird auf diese Weise nach jeder halben Periode zwischen 0° und 180° umgeschaltet. Diese periodische Umschaltung der Phasenlage stellt in vorteilhafter Weise sicher, dass die Störsignale mit ständig alternierendem Vorzeichen integriert werden, während die Integration des Nutzsignals mit konstantem Vorzeichen erfolgt. Bezogen auf jeweils zwei Perioden wird im Sendezweig jeweils in der ersten und der zweiten halben Periode T_{PW} und im Empfangszweig jeweils in der ersten und der vierten halben Periode ein Puls erzeugt, Nach jeweils zwei Perioden wiederholt sich der Vorgang.

Besonders vorteilhaft für eine effektive Störsignalunterdrückung ist, wenn die Integration des gemischten Signals über eine ganzzahlige Anzahl von 2n Perioden T_{PW} n = 1, 2, 3, ... der Pulswiederholfrequenz f_{PW} erfolgt. Auf diese Weise wird sichergestellt, dass die alternierende Integration der Störsignale und somit ihre Unterdrückung gelingt.

Es ist nützlich, wenn die Trägerfrequenz f_{T} und die Pulswiederholfrequenz f_{PW} in einem ganzzahligen Verhältnis stehen. Dies kann dadurch erreicht werden, dass die Trägerfrequenz durch einen ganzzahligen Faktor dividiert wird. Eine andere Möglichkeit zur Bereitstellung des ganzzahligen Verhältnisses besteht darin, die Trägerfrequenz durch Multiplikation einer Oszillatorfrequenz mit einer ganzen Zahl zu erzeugen und andererseits die Pulswiederholfrequenz über eine Division derselben Oszillatorfrequenz durch eine ganze Zahl zu erzeugen. Das ganzzahlige Verhältnis der Trägerfrequenz und der Pulswiederholfrequenz sorgt für eine effektive Störsignalunterdrükkung, da Pulsanfang und Pulsende stets mit einer definierten Phasenlage des Trägersignals zusammenfallen.

Es kann ebenfalls vorteilhaft sein, dass Mittel zur BPSK-Modulation des Trägersignals in dem Sendezweig und in dem Empfangszweig vorgesehen sind, dass in dem Empfangszweig durch die BPSK-Modulation eine Umschaltung der Phasenlage für eine Periode T_{PW} der Pulswiederholfrequenz f_{PW} erfolgt und dass in dem Sendezweig durch die BPSK-Modulation eine Umschaltung der Phasenlage bei jeder zweiten Pulsperiode der Pulswiederholfrequenz f_{PW} und im Sende- und Empfangszweig während der Dauer τ eines jeden Pulses erfolgt. Hierdurch gelingt es, neben den Störsignalen aufgrund parasitärer Effekte, auch externe Störsignale zu unterdrükken.

Weiterhin kann es nützlich sein, wenn Schaltungsmittel zum Umschalten der Polarität des Empfangssignals vorgesehen sind. Eine derartige Polaritätsumschaltung auf Hardwarebasis ist geeignet, die Integration der Störsignale mit alternierendem Vorzeichen sicherzustellen.

Es kann aber auch nützlich sein, wenn das Umschalten der Polarität des Empfangssignals digital erfolgt. Eine derartige digitale und vorzugsweise programmgesteuerte Polaritätsumschaltung nach der Analog-Digital-Wandlung verringert den Hardwareaufwand. Die Integration erfolgt hier zweckmäßig digital, beispielsweise durch Dezimation, das heißt Tiefpassfilterung und nachfolgende Verringerung der Abtastrate. Ein externer Tiefpass dient in diesem Fall zur Unterdrückung von Aliasing. Allerdings muss bei diesem digitalen Verfahren das I-Signal beziehungsweise das Q-Signal mit einer hohen Bandbreite B (B > f_{PW}) und entsprechend hoher Abtastfrequenz abgetastet und digital weiterverarbeitet werden. Hierdurch ist wiederum zusätzlicher Hardwareaufwand nötig.

Die Erfindung baut gemäß einer ersten Ausführungsform auf dem Verfahren des Standes der Technik dadurch auf, dass eine BPSK-Modulation ("Binary Phase Shift Keying") des Trägersignals erfolgt. Durch eine BPSK-Modulation des Trägersignals kann erreicht werden, dass bei der nachfolgenden Integration Störsignale mit ständig alternierendem Vorzeichen integriert werden, während die Integration des Nutzsignals mit konstantem Vorzeichen erfolgt. Auf diese Weise werden die Störsignale unterdrückt.

Die Erfindung baut gemäß einer zweiten Ausführungsform auf dem Verfahren des Standes der Technik dadurch auf, dass ein Umschalten der Polarität des Empfangssignals erfolgt. Auf diese Weise erreicht man ebenfalls durch die nachfolgende Integration eine weitgehende Unterdrückung der Störsignale, während die Nutzsignale weiterverarbeitet werden.

Vorzugsweise erfolgt eine BPSK-Modulation des Trägersignals in dem Sendezweig. Bei dieser Variante kann das Trägersignal in dem Empfangszweig ohne BPSK-Modulation als Referenzsignal dem Mischer zugeführt werden. Im Sendezweig erfolgt hingegen eine Modulation, so dass hier die für die Störsignalunterdrückung erforderliche Information vorliegt.

Es kann auch vorteilhaft sein, dass eine BPSK-Modulation des Trägersignals in dem Empfangszweig erfolgt. Als Referenzsignal wird in diesem Fall ein BPSK-moduliertes Trägersignal verwendet, während das Sendesignal unmoduliert ausgesendet wird. Die für die Störsignalunterdrückung erforderliche Information ist in dem Trägersignal in dem Empfangszweig enthalten.

Ebenfalls kann es nützlich sein, wenn durch die BPSK-Modulation eine Umschaltung der Phasenlage für eine halbe Periode T_{PW} der Pulswiederholfrequenz f_{PW} erfolgt. Die Phase des modulierten Trägersignals wird auf diese Weise nach jeder halben Periode zwischen 0° und 180° umgeschaltet. Diese periodische Umschaltung der Phasenlage stellt in vorteilhafter Weise sicher, dass die Störsignale mit ständig alternierendem Vorzeichen integriert werden, während die Integration des Nutzsignals mit konstantem Vorzeichen erfolgt.

Vorzugsweise erfolgt die Integration des gemischten Signals über eine ganzzahlige Anzahl von 2n Perioden T_{PW} mit n = 1, 2, 3, ... der Pulswiederholfrequenz f_{PW}. Auf diese Weise wird sichergestellt, dass die alternierende Integration der Störsignale und somit ihre Unterdrückung gelingt.

Nützlicherweise stehen die Trägerfrequenz f_{T} und die Pulswiederholfrequenz f_{PW} in einem ganzzahligen Verhältnis. Dies kann dadurch erreicht werden, dass die Trägerfrequenz durch einen ganzzahligen Faktor dividiert wird. Eine andere Möglichkeit zur Bereitstellung des ganzzahligen Verhältnisses besteht darin, die Trägerfrequenz durch Multiplikation einer Oszillatorfrequenz mit einer ganzen Zahl zu erzeugen und andererseits die Pulswiederholfrequenz über eine Division derselben Oszillatorfrequenz durch eine ganze Zahl zu erzeugen. Das ganzzahlige Verhältnis der Trägerfrequenz und der Pulswiederholfrequenz sorgt für eine effektive Störsignalunterdrückung, da Pulsanfang und Pulsende stets mit einer definierten Phasenlage des Trägersignals zusammenfallen.

Ebenfalls kann es vorteilhaft sein, wenn eine BPSK-Modulation des Trägersignals in dem Sendezweig und in dem Empfangszweig erfolgt, wenn in dem Empfangszweig durch die BPSK-Modulation eine Umschaltung der Phasenlage für eine Periode der Pulswiederholfrequenz f_{PW} erfolgt und wenn in dem Sendezweigzweig durch die BPSK-Modulation eine Umschaltung der Phasenlage bei jeder zweiten Pulsperiode der Pulswiederholfrequenz f_{PW} und im Sende- und Empfangszweig während der Dauer τ eines jeden Pulses erfolgt. Hierdurch gelingt es, neben den Störsignalen aufgrund parasitärer Effekte, auch externe Störsignale zu unterdrücken. In dieser Ausführungsform wird in jeder Periode T_{PW} der Pulswiederholfrequenz f_{PW} jeweils ein Puls im Sendezweig und ein Puls im Empfangszweig erzeugt.

Vorzugsweise wird die Polarität des Empfangssignals durch Schaltungsmittel umgeschaltet. Eine derartige Polaritätsumschaltung auf Hardwarebasis ist geeignet, die Integration der Störsignale mit alternierendem Vorzeichen sicherzustellen.

Ebenfalls kann vorteilhaft sein, wenn die Polarität des Empfangssignals digital umgeschaltet wird. Eine derartige digitale und vorzugsweise programmgesteuerte Polaritätsumschaltung nach der Analog-Digital-Wandlung verringert den Hardwareaufwand. Die Integration erfolgt hier zweckmäßig digital, beispielsweise durch Dezimation, das heißt Tiefpassfilterung und nachfolgende Verringerung der Abtastrate. Ein externer Tiefpass dient in diesem Fall zur Unterdrückung von Aliasing. Allerdings muss bei diesem digitalen Verfahren das I-Signal beziehungsweise das Q-Signal mit einer hohen Bandbreite B (B > f_{PW}) und entsprechend hoher Abtastfrequenz abgetastet und digital weiterverarbeitet werden. Hierdurch ist wiederum zusätzlicher Hardwareaufwand nötig.

Der Erfindung liegt die überraschende Erkenntnis zugrunde, dass Störbeeinflussungen durch parasitäre Effekte bei real aufgebauten Radareinrichtungen mit relativ geringem technischen Aufwand unterdrückt werden können. Durch den Einsatz einer BPSK-Modulation beziehungsweise durch die Umschaltung der Polarität des Empfangssignals gelingt es, die Störsignale mit ständig alternierendem Vorzeichen zu integrieren, während die Integration des Nutzsignals mit konstantem Vorzeichen erfolgt. Als besonders vorteilhafte Ausführungsform ist zu erwähnen, dass bei BPSK-Modulation sowohl im Sendezweig als auch im Empfangszweig erreicht werden kann, nicht nur Störbeeinflussungen durch parasitäre Effekte zu unterdrücken; vielmehr ist auch die Unterdrückung externer Störsignale möglich.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine schematische Darstellung einer Radarein- richtung des Standes der Technik;
- Figur 2: eine schematische Darstellung einer erfindungs- gemäßen Radareinrichtung;
- Figur 3: graphische Darstellungen der Amplitude von Sen- de- und Empfangssignalen der Radareinrichtung gemäß Figur 2;
- Figur 4: eine schematische Darstellung einer erfindungs- gemäßen Radareinrichtung;
- Figur 5: graphische Darstellungen der Amplitude von Sen- de- und Empfangssignalen der Radareinrichtung gemäß Figur 4;
- Figur 6: eine schematische Darstellung einer erfindungs- gemäßen Radareinrichtung;
- Figur 7: eine schematische Darstellung einer erfindungs- gemäßen Radareinrichtung; und
- Figur 8: graphische Darstellungen der Amplitude von Sen- de- und Empfangssignalen der Radareinrichtung gemäß Figur 7.

### Beschreibung der Ausführungsbeispiele

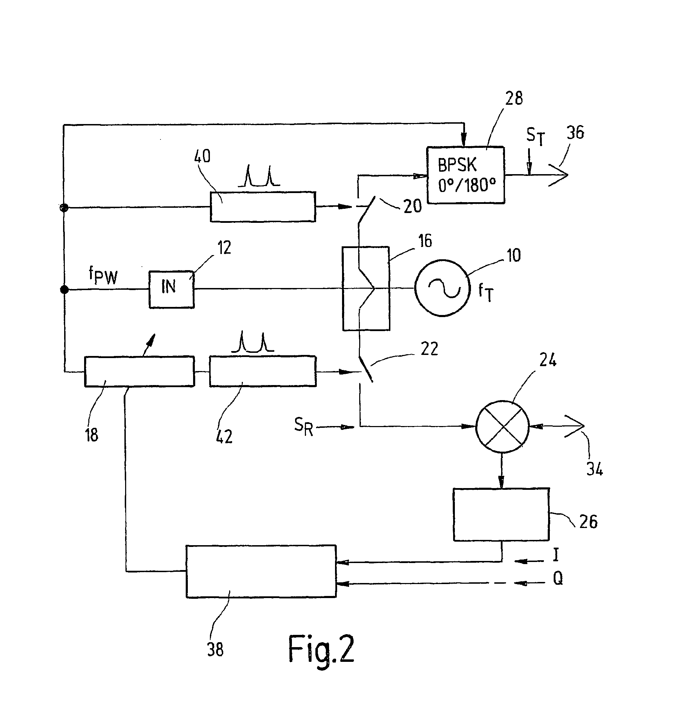

Figur 2 zeigt eine schematische Darstellung einer erfindungsgemäßen Radareinrichtung. Ein Lokaloszillator 10 ist mit einem Leistungsteiler 16 verbunden. Dieser Leistungsteiler 16 steht mit einem Sendezweig in Verbindung. Ein Teil der Leistung des Lokaloszillators 10 wird von dem Leistungsteiler 16 in den Empfangszweig ausgekoppelt. Der Lokaloszillator 10 ist ferner mit einem Frequenzteiler 12 verbunden. Der Frequenzteiler 12 setzt die Trägerfrequenz f_{T} des Lokaloszillators 10 um den Faktor N herab. Diese herabgesetzte Frequenz wird einer Pulsformung 40 und deiner Verzögerungseinrichtung 18 zugeführt. Diese Pulsformung 40 betätigt einen Schalter 20 im Sendezweig zum Modulieren des Trägersignals. Das verzögerte Ausgangssignal der Verzögerungseinrichtung 18 wird an eine Pulsformung 42 weitergeleitet. Diese Pulsformung 42 erzeugt Pulse, mit denen das Trägersignal in dem Empfangszweig mittels des Schalters 22 moduliert wird. Auf diese Weise wird ein Referenzsignal S_{R} erzeugt. Somit liegen sowohl im Sendezweig als auch im Empfangszweig Signale vor, die mit den Pulsen der jeweiligen Pulsformungen 40, 42 moduliert sind. Das Signal im Sendezweig wird nachfolgend einer BPSK-Modulation 28 zugeführt, welche das Sendesignal zwischen 0° und 180° umschaltet. Diese Umschaltung zwischen 0° und 180° erfolgt mit einer halben Periodendauer, welche der Periodendauer T_{PW} der doppelten Pulswiederholfrequenz f_{PW} entspricht. Dies wird dadurch erreicht, dass die BPSK-Modulation 28 durch ein Ausgangssignal des Frequenzteilers 12 gesteuert wird. Auf diese wird die Phase nach jeder halben Periode der Pulswiederholfrequenz f_{PW} umgeschaltet. Das so BPSK-modulierte Signal wird von der Sendeantenne 36 ausgesendet und nach Reflexion an einem Ziel von der Empfangsantenne 34 empfangen. Das von der Empfangsantenne 34 empfangene Signal wird einem Mischer 24 zugeführt, wo es mit dem Referenzsignal S_{R} gemischt wird. Das Ausgangssignal des Mischers 24 wird in einem Tiefpass 26 integriert und verstärkt. Das Ausgangssignal des Tiefpasses 26 wird einer Signalauswertung und Steuerung 38 zugeführt. Die Steuerung 38 stellt die Verzögerung der Verzögerungseinrichtung 18 ein. Die periodische Umschaltung der Phasenlage führt dazu, dass die Integration des entsprechenden Störsignals mit ständig alternierendem Vorzeichen erfolgt und somit das Störsignal minimiert wird. Die Integration des Nutzsignals erfolgt hingegen mit konstantem Vorzeichen. Für eine effektive Störsignalunterdrückung ist es zudem notwendig, dass die Trägerfrequenz f_{T} und die Pulswiederholfrequenz f_{PW} in einem ganzzahligen Verhältnis: N = f_{T}/f_{PW} stehen. Das kann, wie dargestellt, durch Teilung der Trägerfrequenz mit dem Faktor: N oder durch Multiplikation einer Oszillatorfrequenz fₒ mit: f_{T} = N₁fₒ und Teilung: f_{PW} = fₒ/N₂ mit: N₁N₂ = N und N₂ = 1, 2, ... erfolgen (nicht dargestellt). In Figur 2 wurde nur die Bildung des Inphase(I)-Signals dargestellt. Die Bildung des Quadratur(Q)-Signals erfolgt durch Mischung mit der um 90° phasenverschobenen Trägerfrequenz f_{T} in analoger Weise.

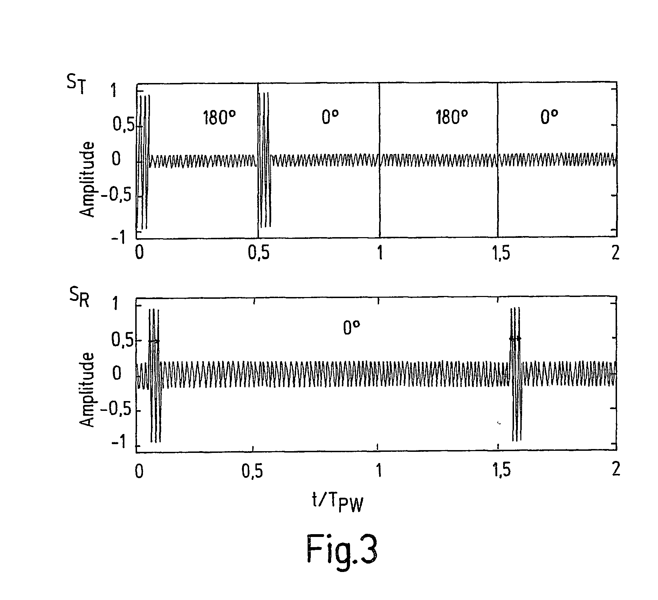

In Figur 3 ist oben die Amplitude des Sendesignal S_{T} über zwei Perioden T_{PW} der Pulswiederholfrequenz f_{PW} dargestellt. Im unteren Teil der Figur 3 ist das Referenzsignal S_{R} über denselben Zeitraum dargestellt. Figur 3 stellt die Signalverhältnisse dar, wie sie in einer Schaltung gemäß Figur 2 auftreten, das heißt mit einer BPSK-Modulation im Sendezweig. Man erkennt, dass das Sendesignal nach jeder Periode T_{PW} der Pulswiederholfrequenz f_{PW} umgeschaltet wird. Das verzögerte Empfangssignal wird nicht phasenmoduliert.

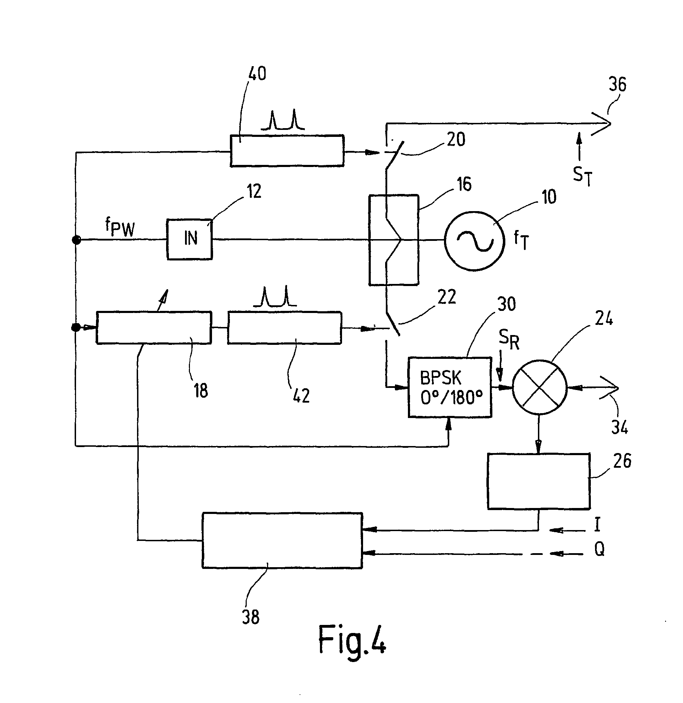

In Figur 4 ist eine weitere Radareinrichtung wiederum beispielhaft anhand des Inphase(I)-Signals erläutert. Auch hier erfolgt die Bildung des Quadratur(Q)-Signals durch Mischung mit der um 90° phasenverschobenen Trägerfrequenz f_{T} in analoger Weise. Komponenten, welche denjenigen aus Figur 2 entsprechen, sind mit den gleichen Bezugszeichen gekennzeichnet. Im Unterschied zu Figur 2 wird bei der Radareinrichtung gemäß Figur 4 der Empfangszweig BPSK-moduliert. Die Sendesignale werden hingegen ohne vorherige BPSK-Modulation von der Sendeantenne 36 ausgesendet. Durch die BPSK-Modulation im Empfangszweig wird ein BPSK-moduliertes Referenzsignal S_{R} erzeugt, welches mit dem Empfangssignal in dem Mischer 24 gemischt wird.

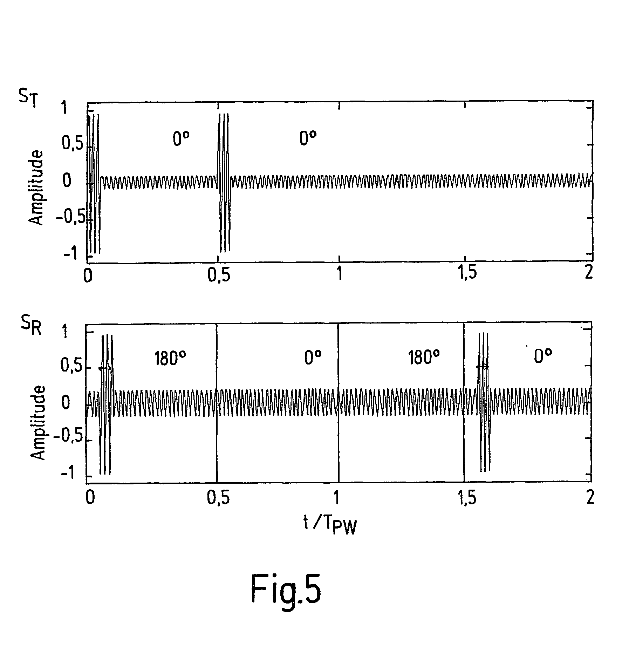

Der Verlauf der Signale, welche in einer Schaltung gemäß Figur 4 auftreten, ist in Figur 5 graphisch dargestellt. Im oberen Teil der Figur 5 ist das Sendesignal S_{T} gezeigt. Im unteren Teil der Figur 5 ist das Referenzsignal S_{R} dargestellt. Anhand von Figur 5 ist zu erkennen, dass das Sendesignal nicht phasenmoduliert ist. Die Phase des verzögerten Empfangssignals wird nach jeder halben Periode T_{PW} der Pulswiederholfrequenz umgeschaltet.

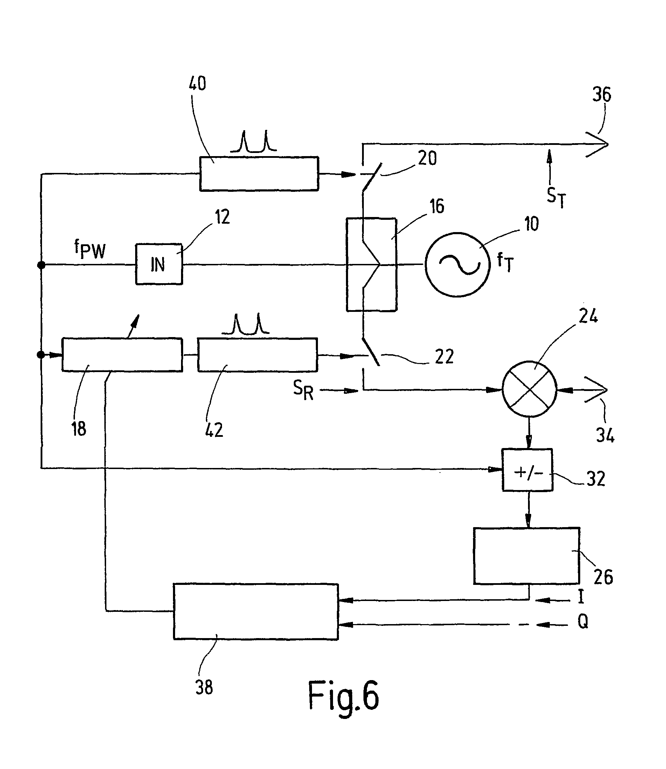

In Figur 6 ist eine weitere Ausführungsform einer erfindungsgemäßen Radareinrichtung dargestellt. Wiederum sind Komponenten, welche denjenigen aus Figur 2 entsprechen, mit denselben Bezugszeichen gekennzeichnet. Die Besonderheit an Figur 6 ist, dass anstelle einer BPSK-Modulation Mittel 32 zum Umschalten der Polarität des Empfangssignals vorgesehen sind. Auch hierdurch lässt sich aufgrund der nachfolgenden Integration die Störbeeinflussung unterdrücken, da diese mit alternierendem Vorzeichen integriert wird, während die Nutzsignale stets mit dem gleichen Vorzeichen integriert werden.

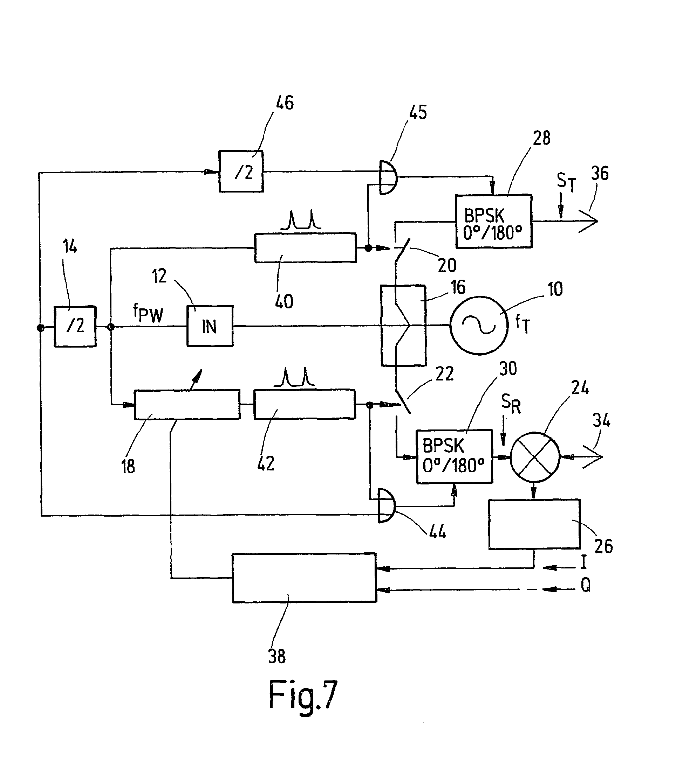

In Figur 7 ist eine weitere Ausführungsform einer erfindungsgemäßen Radareinrichtung schematisch dargestellt. Hier ist sowohl in dem Sendezweig als auch in dem Empfangszweig eine BPSK-Modulation 28, 30 vorgesehen. Die BPSK-Modulation 30 in dem Empfangszweig erfolgt in Abhängigkeit des Ausgangssignals eines ODER-Gatters 44. Eingangssignale dieses ODER-Gatters 44 sind die verzögerten Pulse sowie die durch zwei geteilte Pulswiederholfrequenz f_{PW}. Somit erreicht man, dass die Phasenmodulation im Empfangszweig während der Dauer τ der Pulse und in jeder zweiten Pulsperiode T_{PW} der Pulswiederholfrequenz erfolgt. Allerdings ist hier ein höherer Aufwand an Hardware erforderlich.

Die BPSK-Modulation 28 im Sendzweig erfolgt in Abhängigkeit eines weiteren ODER-Gatters 45. Eingangssignale diese ODER-Gatters 45 sind die Pulse aus der Pulsformung 40 sowie die durch vier geteilte Pulswiederholfrequenz f_{PW} am Ausgang eines weiteren Teilers 46. Somit erreicht man, dass die Phasenmodulation im Sendezweig während der Dauer τ der Pulse und für die Dauer von jeweils zwei Perioden der Pulswiederholfrequenz f_{PW} in der dritten und vierten Periode von jeweils vier Perioden erfolgt. Nach jeweils vier Perioden wiederholt sich das soeben beschriebene Modulationsschema in gleicher Weise.

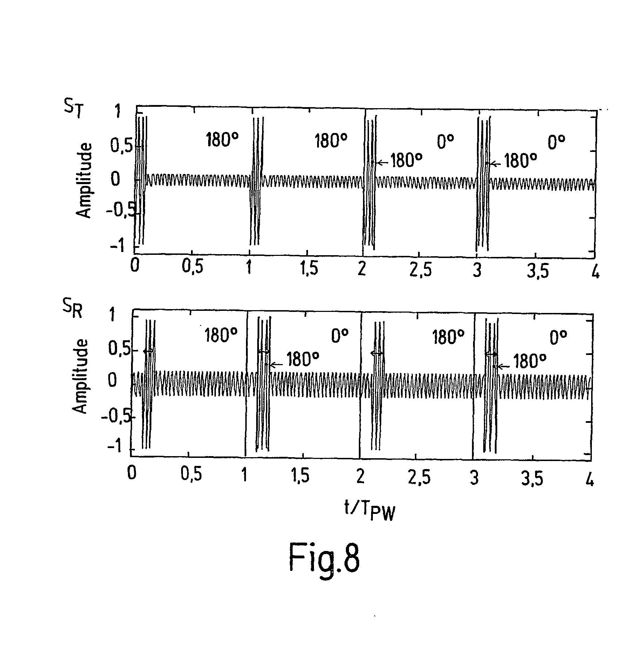

Die Signale, welche in einer erfindungsgemäßen Radareinrichtung gemäß Figur 7 auftreten, sind in Figur 8 dargestellt. Im oberen Teil von Figur 8 ist wiederum das Sendesignal S_{T} dargestellt. Im unteren Teil ist das Referenzsignal S_{R} gezeigt. Man erkennt, dass die Phase des Sendesignals nach jeder zweiten Periode T_{PW} der Pulswiederholfrequenz und während der Dauer τ jedes Pulses umgeschaltet wird. Die Phase des Referenzsignals wird hingegen nach jeder Periode T_{PW} der Pulswiederholfrequenz und während der Dauer τ eines jeden Pulses umgeschaltet.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Radareinrichtung mit
- Mitteln (10) zum Erzeugen eines Trägersignals mit einer Trägerfrequenz f_{T},
- Mitteln (12) zum Erzeugen von Pulsen mit einer Pulswiederholfrequenz f_{PW},
- Mitteln (16) zum Aufteilen des Trägersignals auf einen Sendezweig und einen Empfangszweig,
- Mitteln (18) zum Verzögern der Pulse,
- Mitteln (20) zum Modulieren des Trägersignals in dem Sendezweig mit den unverzögerten Pulsen,
- Mitteln (22) zum Modulieren des Trägersignals in dem Empfangszweig mit den verzögerten Pulsen und zum Erzeugen eines Referenzsignals,
- Mitteln (24) zum Mischen des Referenzsignals in dem Empfangszweig mit einem Empfangssignal und
- Mitteln (26) zum Integrieren des gemischten Signals,
**dadurch gekennzeichnet,**
- **dass** Mittel (28, 30) zur BPSK-Modulation des Trägersignals in dem Sendezweig und in dem Empfangszweig vorgesehen sind,
- **dass** in dem Sendezweig durch die BPSK-Modulation eine Umschaltung der Phasenlage für jeweils zwei Perioden T_{PW} der Pulswiederholfrequenz f_{PW} und während der Dauer τ jedes Pulses erfolgt und
- **dass** in dem Empfangszweig durch die BPSK-Modulation eine Umschaltung der Phasenlage bei jeder Pulsperiode der Pulswiederholfrequenz f_{PW} und während der Dauer τ jedes Pulses erfolgt.

2. Radareinrichtung nach Anspruch 1, **dadurch gekennzeichnet, dass** die Integration des gemischten Signals über eine ganzzahlige Anzahl von 2n Perioden T_{PW} mit n = 1, 2, 3,... der Pulswiederholfrequenz f_{PW} erfolgt.

3. Radareinrichtung nach einem der vorangehenden Ansprüche, **dadurch gekennzeichnet, dass** bezogen auf zwei Pulsperioden T_{PW} im Sendezweig jeweils in der ersten und der zweiten halben Pulsperiode und im Empfangszweig jeweils in der ersten und der dritten halben Pulsperiode ein Puls erzeugt wird und sich nach jeweils zwei Pulsperioden T_{PW} der Vorgang wiederholt.

4. Radareinrichtung nach einem der vorangehenden Ansprüche, **dadurch gekennzeichnet, dass** die Trägerfrequenz f_{T} und die Pulswiederholfrequenz f_{PW} in einem ganzzahligen Verhältnis stehen.

5. Radareinrichtung nach einem der vorangehenden Ansprüche, **dadurch gekennzeichnet, dass** eine Integration des gemischten Signals über eine ganzzahlige Anzahl 4n von Perioden T_{PW} mit n = 1, 2, 3, ... der Pulswiederholfrequenz f_{PW} erfolgt.

6. Radareinrichtung nach einem der vorangehenden Ansprüche, **dadurch gekennzeichnet, dass** im Sende- und Empfangszweig in jeder Pulsperiode T_{PW} jeweils ein Puls erzeugt wird.

7. Radareinrichtung nach einem der vorangehenden Ansprüche, **dadurch gekennzeichnet, dass** Schaltungsmittel (32) zum Umschalten der Polarität des Empfangssignals vorgesehen sind.

8. Radareinrichtung nach einem der vorangehenden Ansprüche, **dadurch gekennzeichnet, dass** das Umschalten der Polarität des Empfangssignals digital erfolgt.

9. Verfahren zum Unterdrücken von Störungen einer Radareinrichtung mit den Schritten
- Erzeugen eines Trägersignals mit einer Trägerfrequenz f_{T},
- Erzeugen von Pulsen mit einer Pulswiederholfrequenz f_{PW},
- Aufteilen des Trägersignals auf einen Sendezweig und einen Empfangszweig,
- Verzögern der Pulse,
- Modulieren des Trägersignals in dem Sendezweig mit den unverzögerten Pulsen,
- Modulieren des Trägersignals in dem Empfangszweig mit den verzögerten Pulsen und Erzeugen eines Referenzsignals,
- Mischen des Referenzsignals in dem Empfangszweig mit einem Empfangssignal und
- Integrieren des gemischten Signals,
**dadurch gekennzeichnet,**
- **dass** eine BPSK-Modulation des Trägersignals in dem Sendezweig und in dem Empfangszweig erfolgt,
- **dass** in dem Sendezweig durch die BPSK-Modulation eine Umschaltung der Phasenlage für zwei Perioden der Pulswiederholfrequenz f_{PW} und während der Dauer τ jedes Pulses erfolgt und
- **dass** in dem Empfangszweig durch die BPSK-Modulation eine Umschaltung der Phasenlage bei jeder zweiten Pulsperiode der Pulswiederholfrequenz f_{PW} und während der Dauer τ jedes Pulses erfolgt.

10. Verfahren nach Anspruch 9, **dadurch gekennzeichnet, dass** die Integration des gemischten Signals über eine ganzzahlige Anzahl von 2n Perioden T_{PW} mit n = 1, 2, 3,... der Pulswiederholfrequenz f_{PW} erfolgt.

11. Verfahren nach Anspruch 9 oder 10, **dadurch gekennzeichnet, dass** die Trägerfrequenz f_{T} und die Pulswiederholfrequenz f_{PW} in einem ganzzahligen Verhältnis stehen.

12. Verfahren nach einem der Ansprüche 9 bis 11, **dadurch gekennzeichnet, dass** die Polarität des Empfangssignals durch Schaltungsmittel (32) umgeschaltet wird.

13. Verfahren nach einem der Ansprüche 9 bis 12, **dadurch gekennzeichnet, dass** die Polarität des Empfangssignals digital umgeschaltet wird.

## Claims

1. Radar device having
- means (10) for production of a carrier signal at a carrier frequency f_{T},
- means (12) for production of pulses at a pulse repetition frequency f_{PW},
- means (16) for splitting the carrier signal into a transmission branch and a reception branch,
- means (18) for delaying the pulses,
- means (20) for modulation of the carrier signal in the transmission branch with the undelayed pulses,
- means (22) for modulation of the carrier signal in the reception branch with the delayed pulses and for production of a reference signal,
- means (24) for mixing the reference signal in the reception branch with a received signal, and
- means (26) for integration of the mixed signal, **characterized**
- **in that** means (28, 30) are provided for BPSK modulation of the carrier signal in the transmission branch and in the reception branch,
- **in that**, in the transmission branch, BPSK modulation is used to switch the phase angle for in each case two periods T_{PW} of the pulse repetition frequency f_{PW} and for the duration τ of each pulse, and
- **in that**, in the reception branch, BPSK modulation is used to switch the phase angle in each pulse period of the pulse repetition frequency f_{PW} and for the duration τ of each pulse.

2. Radar device according to Claim 1, **characterized in that** the mixed signal is integrated over an integer number of 2n periods T_{PW}, where n = 1, 2, 3, ..., is the pulse repetition frequency f_{PW}.

3. Radar device according to one of the preceding claims, **characterized in that** a pulse is in each case produced in the first and the second half pulse period in the transmission branch and in the first and the third half pulse period in the reception branch for two pulse periods T_{PW}, and the process is in each case repeated after two pulse periods T_{PW}.

4. Radar device according to one of the preceding claims, **characterized in that** there is an integer ratio between the carrier frequency f_{T} and the pulse repetition frequency f_{PW}.

5. Radar device according to one of the preceding claims, **characterized in that** the mixed signal is integrated over an integer number 4n of periods T_{PW}, where n = 1, 2, 3,..., of the pulse repetition frequency f_{PW}.

6. Radar device according to one of the preceding claims, **characterized in that** one pulse is in each case produced in the transmission branch and in the reception branch in each pulse period T_{PW}.

7. Radar device according to one of the preceding claims, **characterized in that** circuit means (32) are provided for switching the polarity of the received signal.

8. Radar device according to one of the preceding claims, **characterized in that** the polarity of the received signal is switched digitally.

9. Method for suppression of interference to a radar device having the following steps:
- production of a carrier signal at a carrier frequency f_{T},
- production of pulses at a pulse repetition frequency f_{PW},
- splitting the carrier signal into a transmission branch and a reception branch,
- delaying the pulses,
- modulation of the carrier signal in the transmission branch with the undelayed pulses,
- modulation of the carrier signal in the reception branch with the delayed pulses and production of a reference signal,
- mixing the reference signal in the reception branch with a received signal, and
- integration of the mixed signal,
**characterized**
- **in that** BPSK modulation is carried out on the carrier signal in the transmission branch and in the reception branch,
- **in that**, in the transmission branch, BPSK modulation is used to switch the phase angle for two periods of the pulse repetition frequency f_{PW} and for the duration τ of each pulse, and
- **in that**, in the reception branch, BPSK modulation is used to switch the phase angle in each second pulse period of the pulse repetition frequency f_{PW} and for the duration τ of each pulse.

10. Method according to Claim 9, **characterized in that** the mixed signal is integrated over an integer number of 2n periods T_{PW}, where n = 1, 2, 3, ..., is the pulse repetition frequency f_{PW}.

11. Method according to Claim 9 or 10, **characterized in that** there is an integer ratio between the carrier frequency f_{T} and the pulse repetition frequency f_{PW}.

12. Method according to one of Claims 9 to 11, **characterized in that** the polarity of the received signal is switched by circuit means (32).

13. Method according to one of Claims 9 to 12, **characterized in that** the polarity of the received signal is switched digitally.

## Revendications

1. Équipement radar comprenant :
- des moyens (10) pour générer un signal porteur avec une fréquence porteuse f_{T},
- des moyens (12) pour générer des impulsions avec une fréquence de répétition des impulsions f_{PW},
- des moyens (16) pour distribuer le signal porteur sur une branche d'émission et une branche de réception,
- des moyens (18) pour retarder les impulsions,
- des moyens (20) pour moduler le signal porteur dans la branche d'émission avec les impulsions non retardées,
- des moyens (22) pour moduler le signal porteur dans la branche de réception avec les impulsions retardées et pour générer un signal de référence,
- des moyens (24) pour mélanger le signal de référence dans la branche de réception avec un signal reçu et
- des moyens (26) pour intégrer le signal mélangé, **caractérisé en ce**
- **que** des moyens (28, 30) de modulation MDPB du signal porteur sont prévus dans la branche d'émission et dans la branche de réception,
- **qu'**une inversion de phase est produite dans la branche d'émission par la modulation MDPB à chaque fois pendant deux périodes T_{PW} de la fréquence de répétition des impulsions f_{PW} et pendant la durée τ de chaque impulsion et
- **qu'**une inversion de phase est produite dans la branche de réception par la modulation MDPB à chaque période d'impulsion de la fréquence de répétition des impulsions f_{PW} et pendant la durée τ de chaque impulsion.

2. Équipement radar selon la revendication 1, **caractérisé en ce que** l'intégration du signal mélangé a lieu sur un nombre entier de 2n périodes T_{PW} avec n = 1, 2, 3, ... de la fréquence de répétition des impulsions f_{PW}.

3. Équipement radar selon l'une des revendications précédentes, **caractérisé en ce qu'**en référence à deux périodes d'impulsion T_{PW}, une impulsion est à chaque fois générée dans la branche d'émission dans la première et la deuxième demi-période d'impulsion et à chaque fois générée dans la première et la troisième demi-période d'impulsion dans la branche de réception et l'opération est répétée à chaque fois après deux périodes d'impulsion T_{PW}.

4. Équipement radar selon l'une des revendications précédentes, **caractérisé en ce que** le rapport entre la fréquence porteuse f_{T} et la fréquence de répétition des impulsions f_{PW} est un nombre entier.

5. Équipement radar selon l'une des revendications précédentes, **caractérisé en ce qu'**une intégration du signal mélangé a lieu sur un nombre entier de 4n périodes T_{PW} avec n = 1, 2, 3, ... de la fréquence de répétition des impulsions f_{PW}.

6. Équipement radar selon l'une des revendications précédentes, **caractérisé en ce qu'**une impulsion est à chaque fois générée dans chaque période d'impulsion T_{PW} dans la branche d'émission et de réception.

7. Équipement radar selon l'une des revendications précédentes, **caractérisé en ce que** des moyens de commutation (32) sont prévus pour inverser la polarité du signal reçu.

8. Équipement radar selon l'une des revendications précédentes, **caractérisé en ce que** l'inversion de la polarité du signal reçu s'effectue de manière numérique.

9. Procédé pour atténuer les perturbations d'un équipement radar comprenant les étapes suivantes :
- génération d'un signal porteur avec une fréquence porteuse f_{T},
- génération d'impulsions avec une fréquence de répétition des impulsions f_{PW},
- distribution du signal porteur sur une branche d'émission et une branche de réception,
- retardement des impulsions,
- modulation du signal porteur dans la branche d'émission avec les impulsions non retardées,
- modulation du signal porteur dans la branche de réception avec les impulsions retardées et génération d'un signal de référence,
- mélange du signal de référence dans la branche de réception avec un signal reçu et
- intégration du signal mélangé,
**caractérisé en ce**
- **qu'**une modulation MDPB du signal porteur a lieu dans la branche d'émission et dans la branche de réception,
- **qu'**une inversion de phase est produite dans la branche d'émission par la modulation MDPB pendant deux périodes de la fréquence de répétition des impulsions f_{PW} et pendant la durée τ de chaque impulsion et
- **qu'**une inversion de phase est produite dans la branche de réception par la modulation MDPB à chaque deuxième période d'impulsion de la fréquence de répétition des impulsions f_{PW} et pendant la durée τ de chaque impulsion.

10. Procédé selon la revendication 9, **caractérisé en ce que** l'intégration du signal mélangé a lieu sur un nombre entier de 2n périodes T_{PW} avec n = 1, 2, 3, ... de la fréquence de répétition des impulsions f_{PW}.

11. Procédé selon la revendication 9 ou 10, **caractérisé en ce que** le rapport entre la fréquence porteuse f_{T} et la fréquence de répétition des impulsions f_{PW} est un nombre entier.

12. Procédé selon l'une des revendications 9 à 11, **caractérisé en ce que** la polarité du signal reçu est inversée par des moyens de commutation (32).

13. Procédé selon l'une des revendications 9 à 12, **caractérisé en ce que** la polarité du signal reçu est inversée de manière numérique.
